# FASCICULE DE BREVET EUROPEEN

(11) **EP 2 034 249 B1**
(45) Date de publication et mention de la délivrance du brevet: **12.06.2013**
(21) Numéro de dépôt: 08164011.2
(22) Date de dépôt: 10.09.2008
(51) Int. Cl.: F24J 2/04, F24J 2/52, F24J 2/46

(54) **Installation comprenant une pluralité de panneaux solaires et leur dispositf d'intégration sur un toit**
Einrichtung umfassend mehrere Solarpaneele und Vorrichtung zu deren Einbau auf einem Dach
Installation comprising a plurality of solar panels and device for integrating the panels on a roof

(30) Priorité: 10.09.2007 FR 0757468
(43) Date de publication de la demande: 11.03.2009
(73) Titulaire: Terreal, 92150 Suresnes (FR)
(72) Inventeur: Blavet, Romain, 56610, Arradon (FR); Fabre, Christophe, 81660, Pont de l'Arn (FR); Renon, Olivier, 81100, Castres (FR)
(74) Mandataire: Regimbeau

(56) Documents cités:
- WO-A-00/12839
- WO-A-2004/035954
- DE-A1- 10 321 422
- DE-U1- 7 829 553
- DE-U1- 9 201 273
- DE-U1- 29 521 277
- US-A1- 2005 217 665

## Description

L'invention concerne une installation formée par une pluralité de panneaux solaires et un dispositif d'intégration des panneaux solaires sur un toit.

En particulier, l'invention concerne une telle installation comprenant une pluralité de panneaux solaires disposés horizontalement les uns à côté des autres.

L'invention concerne encore un toit muni d'une telle installation.

L'invention pourra notamment s'appliquer à un toit comprenant des tuiles d'une gamme de tuiles de la famille « Grands Moules du Sud », et à titre d'exemple non limitatif à une tuile de cette famille dénommée Romane Canal par la demanderesse, qui présente un galbe important.

L'installation de panneaux solaires sur le toit de bâtiments est de plus en plus demandée.

Toutefois, l'intégration de ceux-ci sur un toit n'est pas toujours réalisée de manière idéale en ce sens où l'installateur doit le plus souvent trouver une solution qui lui est propre par manque de produits adéquats sur le marché.

En particulier, lorsque plusieurs panneaux solaires sont disposés les uns à côté des autres, des problèmes d'étanchéité sont souvent rencontrés au niveau de la jonction entre ces panneaux.

De tels problèmes sont accentués lorsque l'installation doit être faite sur un toit présentant une pente faible. Par pente faible, il faut comprendre une pente comprise entre 10° et 30°.

En effet, dans ce cas l'eau s'évacue beaucoup moins bien sous l'effet de la gravité, et l'installateur doit en plus prévoir cette contrainte lors de l'installation.

Il en résulte un temps d'installation plus long, des coûts plus importants pour le consommateur final, et aussi, de nombreux problèmes d'étanchéité, lorsque l'installateur a opté pour une solution inadéquate.

Ces questions se posent notamment pour les bâtiments existants pour lesquels on cherche à mettre en place une installation de panneaux solaires, mais également pour les bâtiments neufs.

Par ailleurs, au-delà des questions d'étanchéité, la question se pose de savoir comment intégrer au mieux ces panneaux solaires sur le toit pour que ceux-ci fassent parties intégrantes du toit.

On comprend en effet que le consommateur final accepterait difficilement de voir des panneaux solaires posés sur le toit existant, ou montés à distance de celui-ci. Cette exigence est d'autant plus forte qu'elle est le plus souvent imposée par des normes d'urbanisme.

Plusieurs solutions ont tenté de répondre à ces problèmes par le passé ;

DE 103 21 422 propose des moyens de fixation pour panneau solaire avec des pièces d'angle spécifiques.

US 20050217665 propose un système de fixation pour panneau solaire ne pénétrant pas dans la surface de support.

DE 295 21 277 propose un dispositif de fixation pour panneau solaire.

WO 00/12839 propose une structure et une méthode adaptée pour le montage de panneau solaire.

WO 2004/035954 propose un dispositif de fixation de panneaux solaires.

DE 9201273 propose un module de fixation de panneaux solaires.

DE 78 29 553 U1 propose une installation comprenant une pluralité de panneaux solaires et un dispositif d intégration sur un toit.

Cependant, ces différentes solutions ne fournissent pas une solution satisfaisante pour l'étanchéité et la modularité de panneaux solaires intégrés dans un toit.

Un objectif de l'invention est donc de proposer une installation, plus particulièrement pour une application de type solaire thermique, permettant de renforcer l'étanchéité au niveau de la jonction entre les panneaux solaires.

Plus généralement, un objectif de l'invention est de proposer une installation permettant de pallier les défauts présentés ci-dessus.

Un objectif de l'invention est plus précisément de proposer une telle installation bien adapté pour l'intégration d'un panneau solaire, particulièrement de type solaire thermique, à un toit réalisé avec une gamme de tuiles de la famille " Grands Moules du Sud ".

Un autre objectif est encore de proposer un toit comprenant une telle installation, comportant une pluralité de panneaux disposés horizontalement les uns à côté des autres.

Pour atteindre l'un au moins de ces objectifs, il est prévu une installation comprenant une pluralité de panneaux solaires et un dispositif d'intégration des panneaux solaires sur un toit, telle que définie dans le jeu de revendication annexées.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 est un schéma représentant en vue de perspective un dispositif d'intégration d'une pluralité de panneaux solaires, montés sur les liteaux du toit, en l'absence de panneaux solaires ;
- la figure 2 est un schéma en vue de perspective d'un raccord supérieur du dispositif d'intégration de la figure 1 ;
- la figure 3 est un schéma en vue de perspective du raccord supérieur de la figure 2, une fois installée entre deux parties supérieures de deux panneaux solaires ;
- la figure 4 est un schéma en vue de perspective d'un premier type de raccord d'angle du dispositif d'intégration, destiné à être mis en place au niveau d'un angle supérieur, en l'occurrence d'un angle supérieur gauche, dudit dispositif ;
- la figure 5 est un schéma en vue de perspective d'un raccord d'angle du type de celui illustré sur la figure 4, une fois installé en l'occurrence au niveau d'un angle supérieur droit du dispositif ;
- la figure 6 est une vue élargie de la vue illustrée sur la figure 2, et sur laquelle on peut distinguer à la fois des raccords supérieur et un raccord d'angle montés sur des panneaux solaires ;
- la figure 7 est un schéma selon une vue de perspective d'un couvercle du dispositif d'intégration ;
- la figure 8 est une vue en perspective du couvercle illustré sur la figure 7, une fois installé sur un panneau solaire ;
- la figure 9 est un schéma en vue de perspective d'un raccord inférieur du dispositif d'intégration ;
- la figure 10 est une représentation, en vue de perspective d'un second type de raccord d'angle du dispositif d'intégration, destiné à être mis en place au niveau d'un angle inférieur, en l'occurrence d'un angle inférieur gauche, dudit dispositif ;
- la figure 11 est une représentation en vue de perspective d'un montage comprenant un raccord inférieur monté entre deux panneaux solaires, et un raccord d'angle monté sur l'un des deux panneaux ;
- la figure 12 est une vue en perspective d'un couloir latéral, en l'occurrence d'un couloir gauche, du dispositif d'intégration ;

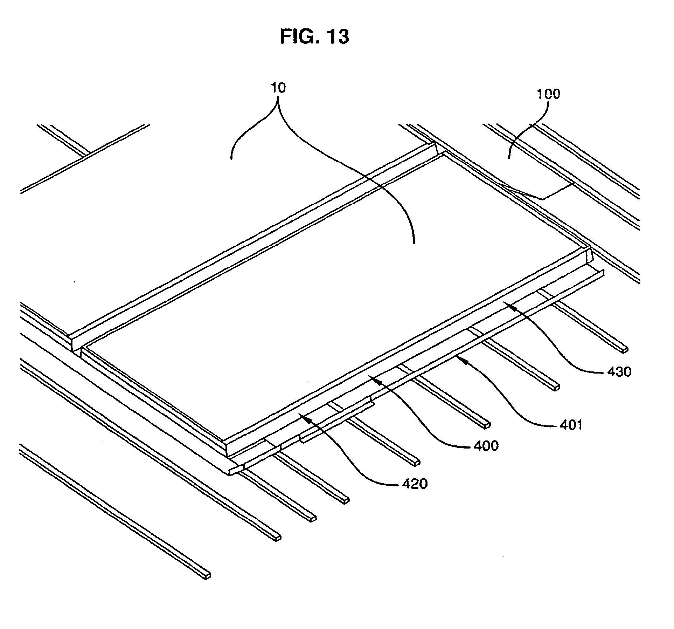

- la figure 13 est une représentation d'un couloir latéral droit, une fois installé sur un panneau solaire, et avec un raccord d'angle et un raccord inférieur.

Le dispositif d'intégration d'une pluralité de panneaux solaires sur un toit comprend un raccord supérieur 100 entre la partie supérieure 11 d'un panneau solaire (10) et le toit, un raccord inférieur 200 entre la partie inférieure 12 du panneau solaire et le toit, et un couloir central 600.

Chaque panneau solaire présentant un châssis 15, le raccord supérieur 100 de forme symétrique est agencé de sorte qu'il assure le raccordement avec deux châssis 15 de panneaux solaires disposés l'un à côté de l'autre, sur une demi-largeur supérieure desdits châssis.

Le raccord inférieur 200 de forme symétrique est quant à lui agencé de sorte qu'il assure le raccordement avec les deux mêmes châssis, sur une demi-largeur inférieure desdits châssis.

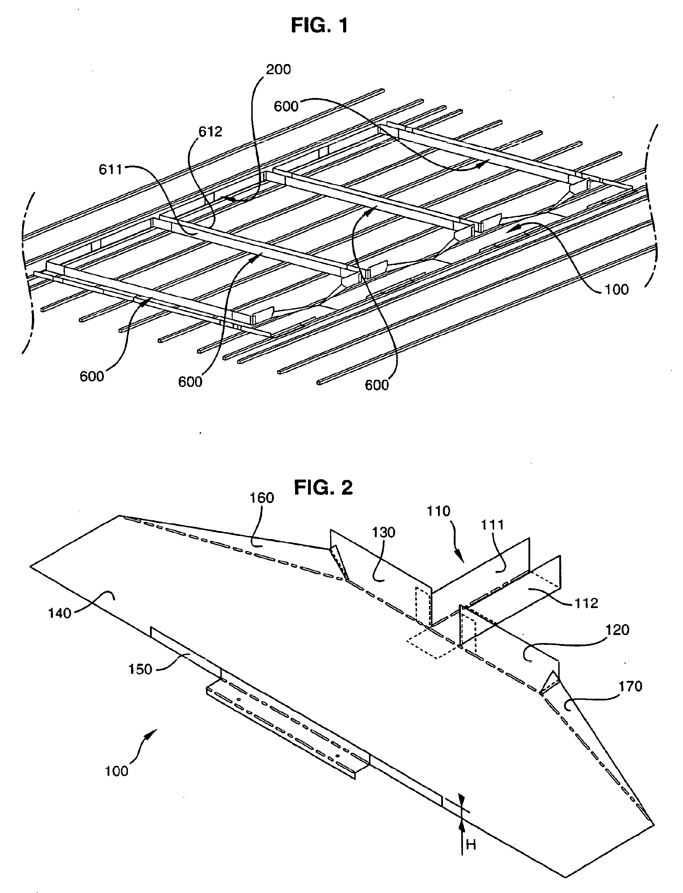

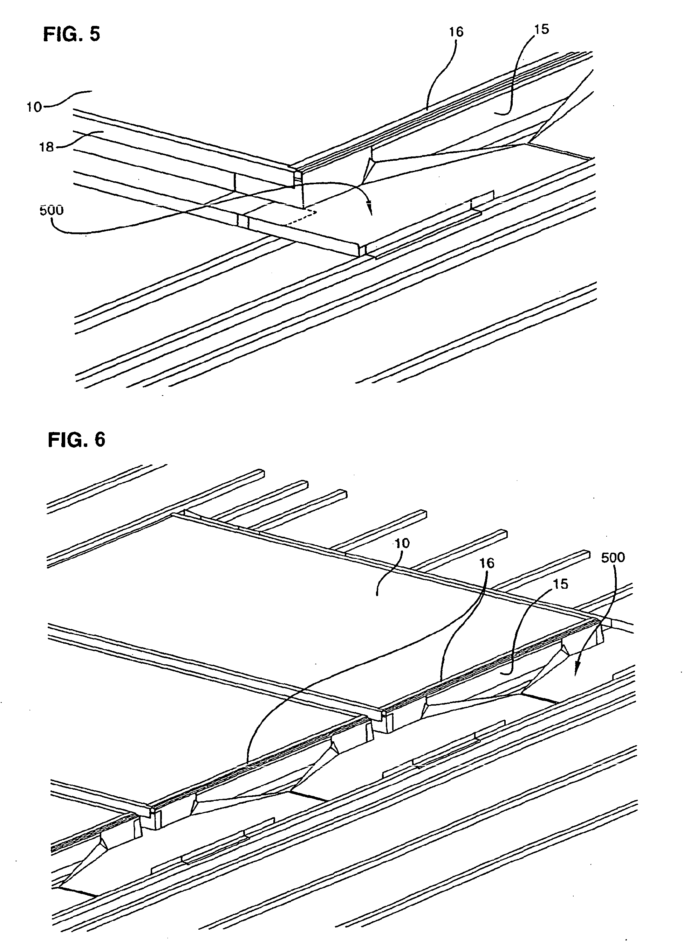

Le couloir central 600 est quant à lui agencé en forme de U pour assurer un recouvrement avec le raccord supérieur 100, le raccord inférieur 200 et les deux châssis 15 disposés l'un à côté de l'autre. Le couloir central 600 est donc situé en sandwich entre ces deux châssis et s'étend selon la hauteur de ceux-ci. Chacun des rebords 611, 612 du couloir central 600 présente une hauteur et une forme adaptées pour venir en prise avec une lamelle 17, 18 fixée sur le côté de châssis de panneau solaire attenant (figures 1, 3 et 5).

Le raccord supérieur 100 comprend par ailleurs un couloir 110 agencé en forme de U (section en U) dont les côtés ou rebords 111, 112 forment respectivement une butée latérale à l'un des deux châssis de panneau solaire entre lesquels le couloir est disposé. Ces côtés 111, 112 sont par ailleurs agencés pour venir en prise avec une lamelle de section droite fixée sur le côté du châssis. A cet effet ils présentent donc une forme permettant cet agencement. (hauteur, épaisseur, partie supérieure plane).

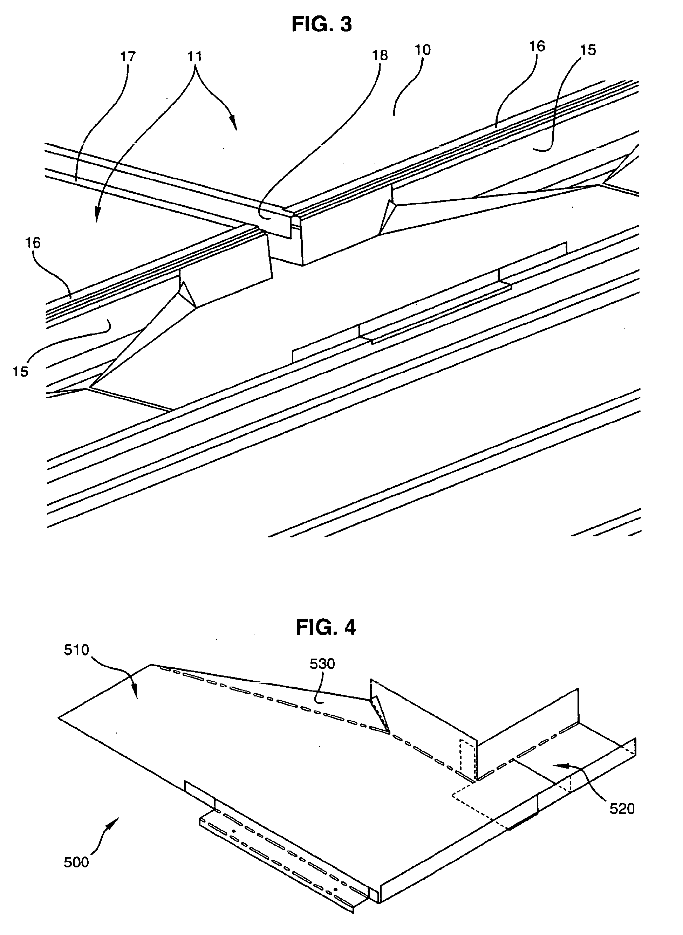

Le raccord supérieur 100 comprend également deux butées supérieures 120, 130 agencées pour venir en appui contre la face arrière d'un des deux châssis. A cet effet, ils sont disposés symétriquement et perpendiculairement par rapport à l'axe du couloir 110. Le châssis d'un panneau solaire est donc correctement maintenu au niveau de ses coins (figures 2, 3). Il comprend également les guides 160 et 170, dans le prolongement des butées.

Le raccord supérieur 100 comprend aussi une partie plane 140 comportant un rebord 150 s'étendant perpendiculairement par rapport à la partie plane 140 et selon la direction de la longueur du raccord supérieur 100, et présentant une hauteur H prédéterminée pour maintenir en position des tuiles du toit directement attenantes au raccord supérieur 100. En l'absence d'une telle pièce 150, la rangée de tuiles au contact du dispositif ne serait pas dans l'alignement du toit et des problèmes d'étanchéité et d'esthétique générale seraient rencontrés (figure 2).

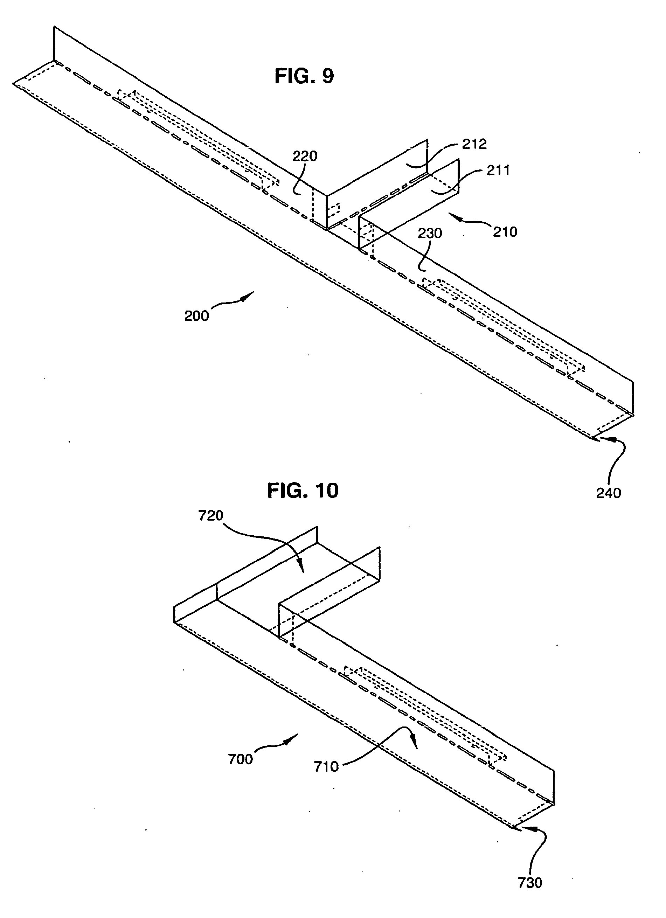

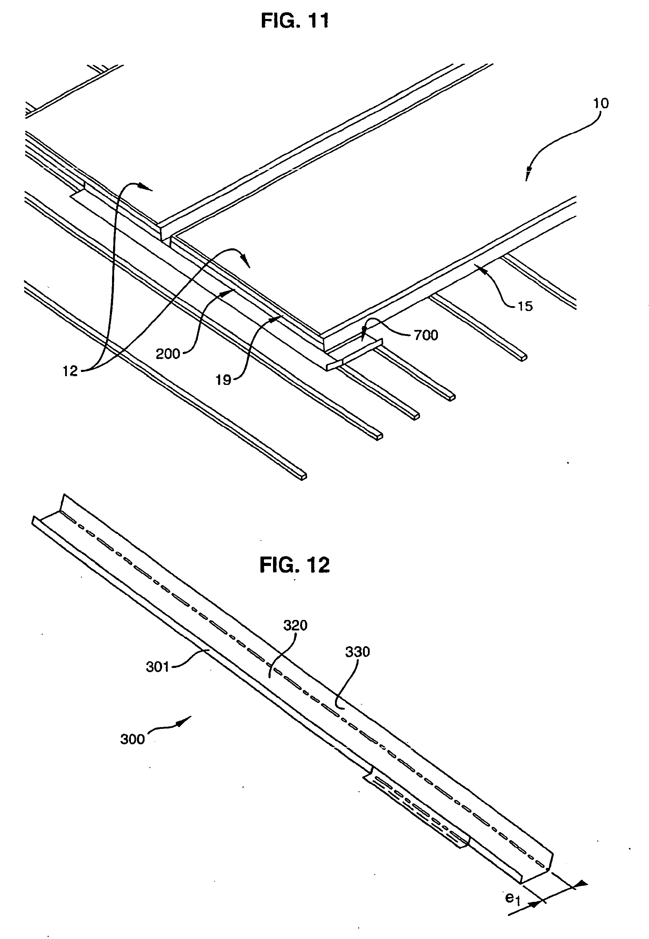

Le raccord inférieur 200 comprend un couloir 210 agencé en forme de U dont les côtés ou rebords 211, 212 forment respectivement des butées latérales à l'un des deux châssis de panneau solaire entre lesquels ce couloir 210 est disposé. Ces côtés 211, 212 présentent une forme adaptée (hauteur, épaisseur, partie supérieure plane) pour venir en prise avec une lamelle 17, 18 de section droite fixée sur le côté correspondant du châssis 15 (figures 9, 11).

Le raccord inférieur 200 comprend également deux butées inférieures 220, 230 disposées symétriquement et perpendiculairement par rapport à l'axe du couloir 210, de longueur adaptée à la demi-largeur d'un châssis. Ces butées 220, 230 présentent une forme adaptée (hauteur, épaisseur, partie supérieure plane) pour venir en prise avec une lamelle 19 de section droite fixée sur la face avant du châssis correspondant (figures 9, 11).

Les lamelles 17, 18, 19 sont fixées par tous moyens adaptés sur le châssis de sorte qu'il existe un jour 170 entre celles-ci et le châssis.

Le dispositif comprend aussi des raccords d'angles 500, 700 qui permettent de raccorder un couloir latéral (qui sera décrit ultérieurement), le châssis de panneau solaire, tant sur le côté de celui-ci que sur sa partie supérieure, et ce de manière analogue au raccord supérieur 100. On distingue à cet effet deux types de raccords d'angles.

Les premiers raccords d'angles 500 comportent une première partie 510 agencée pour assurer le raccordement avec une demi-largeur supérieure d'un châssis et une deuxième partie 520, perpendiculaire à la première partie 510, agencée en forme de couloir à section en U pour venir en prise avec une lamelle 17 fixée sur le côté du châssis (figures 4, 5, 6), ainsi qu'un guide 530.

Les seconds raccords d'angles 700 comportent une première partie 710 agencée pour assurer le raccordement avec une demi-largeur inférieure d'un châssis et une deuxième partie 720, perpendiculaire à la première partie 710, agencée en forme de couloir à section en U pour venir en prise avec une lamelle 17 fixée sur le côté du châssis (figures 10, 11).

La première partie 710 d'un second raccord d'angle 700 est également agencée pour venir en prise avec une lamelle 19 de section droite fixée sur la face avant du châssis.

Avec cet agencement, le châssis 15 et les raccords d'angle 500, 700 sont parfaitement maintenus ensemble, ce qui permet d'assurer une bonne étanchéité.

Le couvercle 800 comprend des moyens d'emboîtement 810 avec un châssis 15 de panneau solaire. Ces moyens d'emboîtement 810 comprennent une butée 811 et un guide 812, 813 à chacune des extrémités de la butée 810 s'étendant perpendiculairement par rapport à la butée 810. Ces moyens d'emboîtement 810 présentent donc une section en forme de U, destinée à recevoir la partie supérieure du châssis 15 du panneau solaire 10. A cet effet, les moyens d'emboîtement présentent une longueur adaptée à la largeur du châssis 15 du panneau solaire.

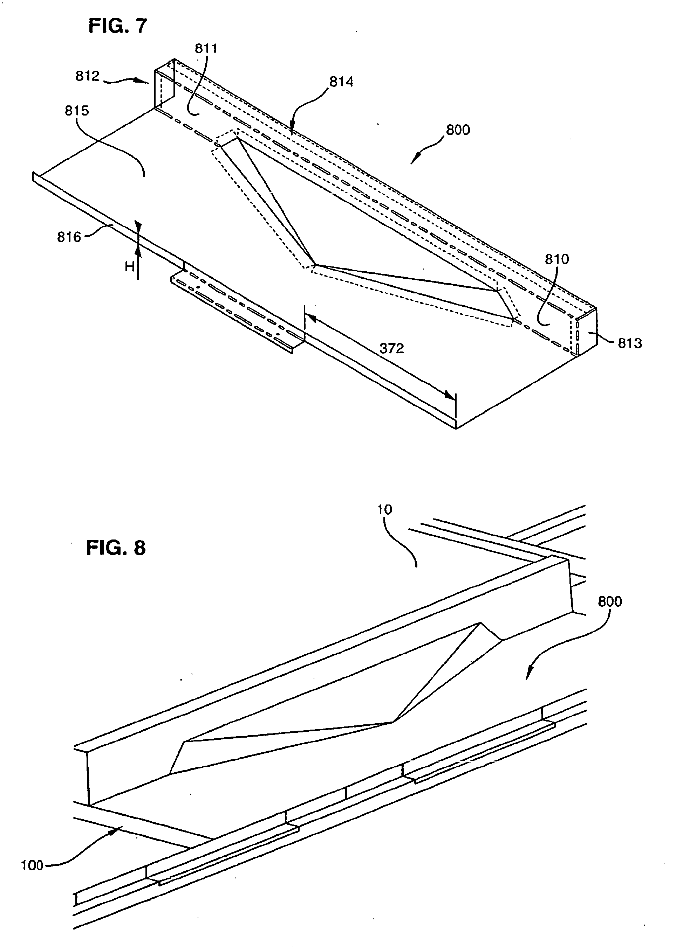

Les moyens d'emboîtement 810 du couvercle comprennent également une agrafe 814 s'étendant dans le prolongement de la butée 810, sur toute la longueur de celle-ci (figures 7, 8).

La section de cette agrafe 814 est agencée pour venir en prise avec une lamelle 16 de section droite fixée sur la partie supérieure du châssis 15 du panneau solaire 10, tout en recouvrant cette lamelle 16 pour l'étanchéité. A cet effet, la lamelle 16 est fixée sur le châssis de sorte qu'il existe un jour entre cette lamelle 16 et le panneau solaire (figures 3, 5, 6 et 8).

L'agrafe 814 permet de protéger la face supérieure de la partie supérieure du châssis 15, ce qui renforce l'étanchéité. La présence de cette agrafe 814, en combinaison avec la lamelle 16 fixée sur le panneau solaire, est particulièrement bien adaptée pour assurer une étanchéité pour des pentes faibles du toit, c'est-à-dire typiquement comprises entre 10° et 30°, et améliore également l'aspect esthétique de l'intégration du panneau solaire 10 sur le toit.

Par ailleurs, le couvercle 800 est disposé en vis-à-vis d'un châssis de panneau solaire, contrairement aux raccords supérieurs 100 qui protègent, sur une demi-largeur de châssis, deux châssis de panneaux solaires. Le couvercle 800 est ainsi monté de manière décalée au-dessus de deux moitiés de raccords supérieurs 100. Une telle disposition participe à maintenir correctement en place les raccords supérieurs et améliore l'étanchéité du dispositif.

Le couvercle 800 comprend une partie plane 815 comportant un rebord 816 s'étendant perpendiculairement par rapport à la partie plane 815 et selon la direction de la longueur du couvercle 800, et présentant une hauteur H prédéterminée pour maintenir en position des tuiles du toit directement attenantes au couvercle 800.

Les couloirs latéraux 300, 400 sont agencés pour assurer le raccordement étanche avec les parties latérales de châssis de panneaux solaires. Plus précisément, chaque couloir 300, 400 de section en forme de U est agencé d'une part pour assurer un recouvrement avec les premiers et seconds raccords d'angles 500, 700 et d'autre part venir en prise avec une lamelle 17, 18 de section droite fixée sur le côté du châssis correspondant.

Les couloirs 300, 400 ainsi que les raccords supérieur 100 et inférieur 200 et le couvercle 800 présentent une largeur suffisante pour recouvrir suffisamment les éléments de toit attenants au panneau solaire, et ce pour assurer une étanchéité parfaite.

Par ailleurs, il est prévu pour les couloirs 300, 400 des replis 301, 401. Ces replis 301, 401 ont une fonction de butée pour les tuiles attenantes.

Les replis 301, 401 des couloirs 300, 400 sont particulièrement bien adaptés à la gamme de tuiles « Grands Moules du Sud », et encore plus particulièrement aux tuiles dites Romane Canal.

En effet, au niveau du couloir gauche 300, le montage est tel que l'extrémité droite de la partie galbée de la tuile de type « Grands Moules du Sud » vienne en butée sur la partie externe du repli 301 du couloir gauche 300, la partie plane de la tuile en continuité de cette partie galbée venant s'insérer au-dessous de la première partie 320 du couloir 300.

Et, au niveau du couloir droit 400, le montage est tel que l'extrémité gauche de la partie galbée vient en prise avec le repli 401 à l'intérieur du couloir 400.

La première partie 320, 420 des couloirs 300, 400 présente une largeur plus importante que les couloirs classiques, à savoir une largeur I1 de l'ordre de 4cm, alors que typiquement la largeur des couloirs est de l'ordre de 3cm. Ceci est particulièrement bien adapté aux contraintes des toits à pente faible, cette largeur permettant d'augmenter le débit d'eau susceptible de s'écouler sur ces couloirs 300, 400. Accessoirement, cela évite que des feuilles viennent se coincer dans les couloirs. Les couloirs jouent ici un rôle de gouttières, vers lesquels l'eau est redirigée au moyen des guides 160, 170 et 530.

La deuxième partie ou rebord 330, 430 est quant à elle destinée à être plaquée contre le panneau solaire, de sorte qu'il n'existe aucun jour entre celle-ci et le panneau solaire pour assurer une bonne étanchéité. A cet effet, les rebords 330, 430 sont agencées (épaisseur, hauteur) pour venir en prise avec une lamelle, de section droite, fixée sur le côté d'un châssis.

Une possibilité de raccordement entre le raccord inférieur 200 et la partie de toit qui lui est attenante est d'utiliser une bavette en Plomb. Cette bavette est disposée sur l'extrémité de la partie galbée de la tuile et vient coopérer avec un rebord incurvé 240 du raccord inférieur 200 pour assurer l'étanchéité.

Une autre possibilité pour assurer le raccord étanche entre le raccord inférieur 200 et le toit, est d'utiliser des tuiles spécialement conçues. Ces tuiles spécialement conçues (non illustrées) font l'objet d'un brevet spécifique de la demanderesse.

Celles-ci, de type tuile à emboîtement, comportent au moins une partie galbée, une partie d'extrémité plane, de largeur comprise entre 100 et 140mm, dans le prolongement supérieur de la partie galbée, la partie d'extrémité plane comprenant au moins une goulotte s'étendant sur toute la largeur de ladite partie plane.

Dans ce cas, chacune de ces tuiles est donc disposée en partie basse de l'ensemble formé par le dispositif selon l'invention et le panneau solaire.

Cette solution ne nécessite pas l'installation d'une bavette en Plomb, ce qui permet une installation plus rapide.

L'invention concerne également une installation comprenant un dispositif tel que décrit ci-dessus et une pluralité de panneaux solaires 10, en particulier de type solaire thermique, comportant chacun un châssis 15 comprenant une première lamelle 16 fixée sur la face supérieure du châssis 15 de sorte qu'il existe un jour entre cette lamelle 16 et le panneau solaire ; et une deuxième lamelle 19 fixée sur la face avant du châssis de sorte qu'il existe un jour entre cette lamelle et la face avant du châssis.

Cette installation comprend encore une troisième lamelle 17 fixée sur le côté gauche du châssis de sorte qu'il existe un jour entre cette lamelle et le côté gauche du châssis ; et une quatrième lamelle 18 fixée sur le côté droit du châssis de sorte qu'il existe un jour entre cette lamelle et le côté droit du châssis.

L'invention concerne encore un toit comprenant une installation comme décrit ci-dessus, et comportant une pluralité de tuiles de type Grands Moules du Sud dont l'extrémité droite de la partie galbée est en butée contre la partie externe d'un repli 301 du couloir latéral gauche 300 de l'ensemble.

Le toit pourra comprendre une pluralité de tuiles de type Grands Moules du Sud dont l'extrémité gauche de la partie galbée vient en prise avec un repli 401 à l'intérieur du couloir latéral droit 400 de l'installation.

Le toit pourra encore comprendre une pluralité de tuiles, de type tuile à emboîtement, disposées en partie basse desdites installations, chaque tuile comportant au moins une partie galbée et une partie d'extrémité plane dans le prolongement supérieur de la partie galbée, la partie d'extrémité plane, d'une largeur comprise entre 100mm et 140mm étant recouverte par le raccord inférieur 200.

L'invention présente donc de nombreux avantages.

L'invention permet d'intégrer au mieux le panneau solaire 10 au toit, notamment le panneau solaire thermique, par des moyens épousant la forme du panneau.

De plus, le temps de pose est réduit, car le dispositif est pensé pour un montage rapide, facile :
- le dispositif peut être monté par simple pose et emboîtement de moyens complémentaires des différentes pièces le composant, chacune de ces pièces étant par ailleurs fixées sur les liteaux de la toiture ;
- la modularité est optimisée pour toutes les configurations d'assemblage en prévoyant des pièces de conception spécifiques ;
- si le dispositif est adapté à la famille de tuiles « Grands Moules du Sud », son montage est encore plus aisé pour les tuiles dénommées Romane Canal par la demanderesse, le choix dans les dimensions du dispositif étant particulièrement bien adapté à cette tuile ;
- le dispositif reste adapté à tout type de tuiles galbées, dont le galbe peut aller jusqu'à 140mm, voire au-delà (le galbe d'une Romane Canal étant de l'ordre de 120mm).

Enfin, l'étanchéité est assurée par de nombreux moyens :
- une barrière multiple est prévue au niveau de la jonction entre les panneaux, par le biais du raccord supérieur 100 et du couvercle 800 qui sont disposés de manière décalée, ce qui permet de renforcer l'étanchéité au niveau de cette jonction ;
- une adaptation de la partie basse du dispositif, particulièrement bien adapté avec une tuile de type Romane Canal de conception spécifique, en évitant l'usage d'une bavette (généralement en Plomb).

Enfin, on note que les solutions proposées, ici sont particulièrement bien adaptées à des toits dont la pente est comprise entre 10 et 30°.

On comprend cependant que l'installation selon l'invention peut tout à fait s'adapter à tout type de panneau solaire. Il suffit pour cela d'y monter des moyens comme les lamelles 16, 17, 18, 19 ou tout autre moyen proposant une fonction équivalente.

## Revendications

1. Installation comprenant une pluralité de panneaux solaires (10) et un dispositif d'intégration des panneaux solaires sur un toit, en particulier pour le solaire thermique, chaque panneau solaire comportant un châssis (15) qui comprend :
• un raccord supérieur (100) de forme symétrique agencé de sorte qu'il assure le raccordement avec deux châssis (15) de panneaux solaires disposés l'un à côté de l'autre ;
• un raccord inférieur (200) de forme symétrique agencé de sorte qu'il assure le raccordement avec deux châssis adjacents;
• un couloir central (600) agencé en forme de U pour assurer un recouvrement avec le raccord supérieur (100) et le raccord inférieur (200) d'une part et un raccordement avec les deux châssis disposés l'un à côté de l'autre d'autre part,
dans laquelle le raccord supérieur (100) assure le raccordement sur une demi-largeur supérieure desdits châssis, le raccord inférieur (200) assure le raccordement sur une demi-largeur inférieure desdits châssis, de sorte que le raccord supérieur (100), le raccord inférieur (200) et le couloir central (600) assurent le raccordement sur les deux mêmes châssis adjacents, **caractérisée en ce que** ledit raccord supérieur comprend des guides (160, 170) adaptés pour rediriger de l'eau vers le couloir central (600) et **en ce que** le couloir central (600) joue un rôle de gouttière.

2. Installation selon la revendication 1, **caractérisée en ce que** le raccord supérieur (100) comprend :
e un couloir (110) agencé en forme de U dont les côtés (111, 112) forment des butées latérales à un châssis de panneau solaire, les côtés (111, 112) étant par ailleurs agencés pour venir en prise avec une lamelle (17, 18) fixée sur le côté du châssis ;
• deux butées supérieures (120, 130) agencées symétriquement et perpendiculairement par rapport à l'axe du couloir (110) pour venir en appui contre la face arrière du châssis.

3. Installation selon l'une des revendications précédentes, **caractérisée en ce que** le raccord supérieur (100) comprend une partie plane (140) comportant un rebord (150) s'étendant perpendiculairement par rapport à la partie plane et selon la direction de la longueur du raccord supérieur (100), et présentant une hauteur H prédéterminée pour maintenir en position des tuiles du toit directement attenantes au raccord supérieur (100).

4. Installation selon l'une des revendications précédentes, **caractérisée en ce que** le raccord inférieur (200) comprend :
• un couloir (210) agencé en forme de U dont les côtés forment des butées latérales à un châssis de panneau solaire, les côtés (211, 212) étant par ailleurs agencés pour venir en prise avec une lamelle (17, 18) fixée sur le côté du châssis ;
• deux butées inférieures (220, 230) agencées symétriquement et perpendiculairement par rapport à l'axe du couloir (210), de longueur adaptée à la demi-largeur d'un châssis, pour venir en prise avec une lamelle (17, 18) fixée sur la face avant du châssis.

5. Installation selon l'une des revendications précédentes, **caractérisée en ce que** le couloir central (600) est agencé en forme de U de sorte que les rebords de celui-ci viennent en prise avec des lamelles (17, 18) fixées sur les côtés des châssis de panneau solaire.

6. Installation selon l'une des revendications précédentes, **caractérisée en ce qu'**elle comprend des premiers raccords d'angles (500) comportant :
- une première partie (510) agencée pour assurer le raccordement avec une demi-largeur supérieure d'un châssis ;
- une deuxième partie (520), perpendiculaire à la première partie (510), agencée en forme de couloir à section en U pour venir en prise avec une lamelle (17) fixée sur le côté du châssis.

7. Installation selon l'une des revendications précédentes, **caractérisée en ce qu'**elle comprend des seconds raccords d'angles (700) comportant :
- une première partie (710) agencée pour assurer le raccordement avec une demi-largeur inférieure d'un châssis ;
- une deuxième partie (720), perpendiculaire à la première partie (710), agencée en forme de couloir à section en U, pour venir en prise avec une lamelle (17) fixée sur le côté du châssis.

8. Installation selon la revendication précédente, **caractérisée en ce que** la première partie (710) d'un second raccord d'angle (700) est agencée pour venir en prise avec une lamelle (19) de section droite fixée sur la face avant du châssis.

9. Installation selon l'une des revendications 7 ou 8, **caractérisée en ce qu'**elle comprend deux couloirs latéraux (300, 400) pour assurer le raccordement avec les parties latérales de châssis de panneaux solaires, chaque couloir (300, 400) étant agencé en forme de U d'une part pour assurer un recouvrement avec les premiers et seconds raccords d'angles et d'autre part venir en prise avec une lamelle fixée sur le côté du châssis correspondant.

10. Installation selon l'une des revendications précédentes, **caractérisée en ce qu'**elle comprend un couvercle (800) associé à chaque châssis de panneau solaire comportant des moyens d'emboîtement (810) avec le châssis (15), lesdits moyens d'emboîtement comportant :
• une butée (811) de longueur adaptée à la largeur du châssis ;
• un guide (812, 813) à chacune des extrémités de la butée s'étendant perpendiculairement par rapport à la butée ;
• une agrafe (814) s'étendant dans le prolongement de la butée, sur la longueur de celle-ci, pour venir en prise avec une lamelle (16) fixée sur la partie supérieure du châssis.

11. Installation selon la revendication précédente, **caractérisée en ce que** le couvercle (800) comprend une partie plane (815) comportant un rebord (816) s'étendant perpendiculairement par rapport à la partie plane (815) et selon la direction de la longueur du couvercle (800), et présentant une hauteur H prédéterminée pour maintenir en position des tuiles du toit directement attenantes au couvercle (800).

12. Installation selon l'une des revendications précédentes et comprenant :
• une première lamelle (16) fixée sur la face supérieure du châssis (15) de sorte qu'il existe un jour entre cette lamelle (16) et le panneau solaire ;
• une deuxième lamelle (19) fixée sur la face avant du châssis de sorte qu'il existe un jour entre cette lamelle et la face avant du châssis.

13. Installation selon la revendication précédente, **caractérisé en ce que** le châssis comprend également :
o une troisième lamelle (17) fixée sur le côté gauche du châssis de sorte qu'il existe un jour entre cette lamelle et le côté gauche du châssis ; et
• une quatrième lamelle (18) fixée sur le côté droit du châssis de sorte qu'il existe un jour entre cette lamelle et le côté droit du châssis.

14. Toit comprenant une installation selon l'une des revendications 12 ou 13, **caractérisé en ce qu'**il comprend une pluralité de tuiles de type Grands Moules du Sud dont l'extrémité droite de la partie galbée est en butée contre la partie externe d'un repli (301) du couloir latéral gauche (300) de l'installation.

15. Toit selon la revendication précédente, **caractérisé en ce qu'**il comprend une pluralité de tuiles de type Grands Moules du Sud dont l'extrémité gauche de la partie galbée vient en prise avec un repli (401) à l'intérieur du couloir latéral droit (400) de l'installation.

16. Toit selon l'une des revendications 14 ou 15, **caractérisé en ce qu'**il comprend une pluralité de tuiles, de type tuile à emboîtement, disposées en partie basse desdites installations, chaque tuile comportant au moins une partie galbée et une partie d'extrémité plane dans le prolongement supérieur de la partie galbée, la partie d'extrémité plane, d'une largeur comprise entre 100mm et 140mm étant recouverte par le raccord inférieur (200).

## Patentansprüche

1. Einrichtung, aufweisend eine Vielzahl von Solarpanels (10) und eine Vorrichtung zur Aufnahme der Solarpanels an einem Dach, insbesondere für die Sonnenwärme, wobei jedes Solarpanel einen Rahmen (15) aufweist, welcher umfasst:
- ein oberes Verbindungsstück (100) in symmetrischer Form, das eingerichtet ist, die Verbindung mit zwei Rahmen (15) von nebeneinander angeordneten Solarpanels zu ermöglichen;
- ein unteres Verbindungsstück (200) in symmetrischer Form, das eingerichtet ist, die Verbindung mit zwei angrenzenden Rahmen zu ermöglichen;
- ein Zentralgangelement (600), das in einer U-Form eingerichtet ist, um eine Überlappung mit dem oberen Verbindungsstück (100) und dem unteren Verbindungsstück (200) einerseits und die Verbindung mit den zwei nebeneinander angeordneten Rahmen andererseits zu ermöglichen,
wobei das Verbindungsstück (100) die Verbindung an einem halb-breiten oberen der Rahmen ermöglicht, wobei die untere Verbindung (200) die Verbindung an einem halb-breiten unteren der Rahmen ermöglicht, so dass das obere Verbindungsstück (100), das untere Verbindungsstück (200) und das Zentralgangelement (600) die Verbindung an den zwei selben angrenzenden Rahmen ermöglichen, **dadurch gekennzeichnet, dass** das obere Verbindungsstück Führungen (160, 170) aufweist, die eingerichtet sind, Wasser in Richtung des Zentralgangelements (600) zu leiten, und dass das Zentralgangelement (600) als Regenrinne fungiert.

2. Einrichtung gemäß Anspruch 1, **dadurch gekennzeichnet, dass** das obere Verbindungsstück (100) aufweist:
- ein Gangelement (110), das in U-Form eingerichtet ist, dessen Seiten (111, 112) seitliche Stützen für einen Rahmen des Solarpanels ausbilden, wobei die Seiten (111, 112) weiterhin eingerichtet sind, mit einer Lamelle (17, 18), die an die Seite des Rahmens fixiert ist, in Eingriff zu gelangen;
- zwei obere Stützen (120, 130), die symmetrisch und senkrecht in Bezug auf die Achse des Gangelements (110) eingerichtet sind, um in Anlage mit der hinteren Fläche des Rahmens zu gelangen.

3. Einrichtung gemäß einem der vorangehenden Ansprüche, **dadurch gekennzeichnet, dass** das obere Verbindungsstück (100) einen ebenen Abschnitt (140) aufweist, der einen Rand (150) aufweist, der sich senkrecht in Bezug auf den ebenen Abschnitt und entlang der Längsrichtung des oberen Verbindungsstücks (100) erstreckt und eine vorbestimmte Höhe H hat, um die Dachplatten des Daches, die unmittelbar an dem oberen Verbindungsstück (100) angrenzen, in Position zu halten.

4. Einrichtung gemäß einem der vorangehenden Ansprüche, **dadurch gekennzeichnet, dass** das untere Verbindungsstück (200) aufweist:
- ein Gangelement (210), das in U-Form eingerichtet ist, dessen Seiten seitliche Stützen für einen Rahmen des Solarpanels ausbilden, wobei die Seiten (211, 212) weiterhin eingerichtet sind, mit einer Lamelle (17, 18), die an die Seite des Rahmens fixiert ist, in Eingriff zu gelangen;
- zwei untere Stützen (220, 230), die symmetrisch und senkrecht in Bezug auf die Achse des Gangelements (210) eingerichtet sind und eine Länge aufweisen, die an die Halb-Breite eines Rahmens angepasst ist, um mit einer Lamelle (17, 18), die an die vordere Fläche des Rahmens fixiert ist, in Eingriff zu gelangen.

5. Einrichtung gemäß einem der vorangehenden Ansprüche, **dadurch gekennzeichnet, dass** das Zentralgangelement (600) in U-Form eingerichtet ist, so dass dessen Ränder mit Lamellen (17, 18), die an die Seiten der Rahmen der Solarpanels fixiert sind, in Eingriff gelangen.

6. Einrichtung gemäß einem der vorangehenden Ansprüche, **dadurch gekennzeichnet, dass** sie erste Winkelverbindungsstücke (500) aufweist, welche umfassen:
- einen ersten Abschnitt (510), der eingerichtet ist, die Verbindung mit einem halbbreiten oberen von einem Rahmen zu ermöglichen;
- einen zweiten Abschnitt (520), der senkrecht zu dem ersten Abschnitt (510) ist und in Form eines Ganges mit einem Querschnitt in U-Form eingerichtet ist, um mit einer Lamelle (17), die an die Seite des Rahmens fixiert ist, in Eingriff zu gelangen.

7. Einrichtung gemäß einem der vorangehenden Ansprüche, **dadurch gekennzeichnet, dass** sie zweite Winkelverbindungsstücke (700) aufweist, welche umfassen:
- einen ersten Abschnitt (710), der eingerichtet ist, um die Verbindung mit einem halbbreiten unteren von einem Rahmen zu ermöglichen;
- einen zweiten Abschnitt (720), der senkrecht auf dem ersten Abschnitt (710) steht und in Form eines Ganges mit einem Querschnitt in U-Form eingerichtet ist, um mit einer Lamelle (17), die an die Seite des Rahmens fixiert ist, in Eingriff zu gelangen.

8. Einrichtung gemäß dem vorangehenden Anspruch, **dadurch gekennzeichnet, dass** der erste Abschnitt (710) von einem zweiten Winkelverbindungsstück (700) eingerichtet ist, mit einer Lamelle (19) eines rechten Abschnitts, die an die vorderen Fläche des Rahmens fixiert ist, in Eingriff zu gelangen.

9. Einrichtung gemäß einem der Ansprüche 7 oder 8, **dadurch gekennzeichnet, dass** sie aufweist: zwei seitliche Gangelemente (300, 400), um die Verbindung mit den seitlichen Abschnitten des Rahmens der Solarpanels zu ermöglichen, wobei jedes Gangelement (300, 400) in U-Form eingerichtet ist, um einerseits eine Überlappung mit den ersten und zweiten Winkelverbindungsstücken zu ermöglichen und um andererseits mit einer Lamelle, die an die Seite des entsprechenden Rahmens fixiert ist, in Eingriff zu gelangen.

10. Einrichtung gemäß einem der vorangehenden Ansprüche, **dadurch gekennzeichnet, dass** sie aufweist: eine Abdeckung (800), die jedem Rahmen der Solarpanels zugeordnet ist, und aufweist: Mittel (810) zum Ineinanderpassen mit dem Rahmen (15), wobei die Mittel zum Ineinanderpassen aufweisen:
- eine Stütze (811) mit einer Länge, die an die Länge des Rahmens angepasst ist;
- eine Führung (812, 813) an jedem der Enden der Stütze, die sich senkrecht in Bezug auf die Stütze erstreckt;
- eine Klemme (814), die sich in der Erstreckung der Stütze auf der Länge von dieser erstreckt, um mit einer Lamelle (16), die an einen oberen Abschnitt des Rahmens fixiert ist, in Eingriff zu gelangen.

11. Einrichtung gemäß dem vorangehenden Anspruch, **dadurch gekennzeichnet, dass** die Abdeckung (800) aufweist: einen ebenen Abschnitt (815) mit einem Rand (816), der sich senkrecht im Bezug auf den ebenen Abschnitt (815) und entlang der Längsrichtung der Abdekkung (800) erstreckt, und eine vorbestimmte Höhe H aufweist, um Dachplatten des Daches, die unmittelbar an die Abdeckung (800) angrenzen, in Position zu halten.

12. Einrichtung gemäß einem der vorangehenden Ansprüche, aufweisend:
- eine erste Lamelle (16), die an die obere Fläche des Rahmens (15) fixiert ist, so dass ein Spiel zwischen der Lamelle (16) und dem Solarpanel besteht;
- eine zweite Lamelle (19), die an die vordere Fläche des Rahmens fixiert ist, so dass ein Spiel zwischen der Lamelle und der vorderen Fläche des Rahmens besteht.

13. Einrichtung gemäß dem vorangehenden Anspruch, **dadurch gekennzeichnet, dass** der Rahmen weiterhin aufweist:
- eine dritte Lamelle (17), die an die linke Seite des Rahmens fixiert ist, so dass ein Spiel zwischen der Lamelle und der linken Seite des Rahmens besteht; und
- eine vierte Lamelle (18), die an die rechte Seite des Rahmens fixiert ist, so dass ein Spiel zwischen der Lamelle und der rechten Seite des Rahmens besteht.

14. Dach mit einer Einrichtung gemäß einem der Ansprüche 12 oder 13, **dadurch gekennzeichnet, dass** es eine Vielzahl von Dachplatten der Bauart "Grands Moules du Sud" aufweist, deren rechtes Ende des runden Abschnitts in Anlage mit dem Außenabschnitt von einer Erhebung (301) des rechten seitlichen Gangelements (300) der Einrichtung steht.

15. Dach gemäß dem vorangehenden Anspruch, **dadurch gekennzeichnet, dass** es eine Vielzahl von Dachplatten der Bauart "Grands Moules du Sud" aufweist, deren linkes Ende des runden Abschnitts in Eingriff mit einer Erhebung (401) im Inneren des rechten seitlichen Gangelements (400) der Einrichtung gelangt.

16. Dach gemäß einem der Ansprüche gemäß 14 oder 15, **dadurch gekennzeichnet, dass** es eine Vielzahl von Dachplatten der Bauart "Tuile à Emboitement" ("Dachziegel zum Ineinandergreifen") aufweist, die teilweise tiefgelegen in den Einrichtungen angeordnet sind, wobei jede Dachplatte aufweist: zumindest einen runden Abschnitt und einen planen Endabschnitt in der oberen Erstreckung des runden Abschnitts, wobei der ebene Endabschnitt mit einer Länge zwischen 100mm und 140mm durch das untere Verbindungsstück (200) überdeckt wird.

## Claims

1. Installation comprising a plurality of solar panels (10) and a device for integrating solar panels on a roof, in particular for thermal solar energy, with each solar panel comprising a frame (15) which comprises:
- a symmetrical shaped upper connection (100) arranged in such a way that it provides the connection with two frames (15) of solar panels placed side by side;
- a symmetrical shaped lower connection (200) arranged in such a way that it provides the connection with two adjacent frames;
- a central passage (600) is arranged in a U-shape in order to provide a covering with the upper connection (100) and the lower connection (200) on the one hand and a connection with the two frames placed side by side on the other hand,
wherein the upper connection (100) provides the connection on an upper half-width of said frames, the lower connection (200) provides the connection on a lower half-width of said frames, in such a way that the upper connection (100), the lower connection (200) and the central passage (600) provide the connection on the two same adjacent frames, **characterised in that** said upper connection comprises guides (160, 170) adapted to redirect water towards the central passage (600) and **in that** the central passage (600) plays the role of a gutter.

2. Installation according to claim 1, **characterised in that** the upper connection (100) comprises:
- a passage (110) arranged in a U-shape of which the sides (111, 112) form lateral stops for a solar panel frame, the sides (111, 112) being moreover arranged to engage with a blade (17, 18) fastened to the side of the frame;
- two upper stops (120, 130) arranged symmetrically and perpendicularly in relation to the axis of the passage (110) in order to press against the rear surface of the frame.

3. Installation according to one of the preceding claims, **characterised in that** the upper connection (100) comprises a planar portion (140) comprising an edge (150) extending perpendicularly in relation to the planar portion and according to the direction of the length of the upper connection (100), and having a predetermined height H in order to maintain in position roofing tiles directly adjoining the upper connection (100).

4. Installation according to one of the preceding claims, **characterised in that** the lower connection (200) comprises:
- a passage (210) arranged in a U-shape of which the sides form lateral stops for a solar panel frame, the sides (211, 212) being moreover arranged to engage with a blade (17, 18) fastened to the side of the frame;
- two lower stops (220, 230) arranged symmetrically and perpendicularly in relation to the axis of passage (210), of a length adapted to the half-width of a frame, in order to engage with a blade (17, 18) fastened to the front surface of the frame.

5. Installation according to one of the preceding claims, **characterised in that** the central passage (600) is arranged in a U-shape in such a way that the edges of the latter engage with blades (17, 18) fastened to the sides of the solar panel frames.

6. Installation according to one of the preceding claims, **characterised in that** it comprises first corner connectors (500) comprising:
- a first portion (510) arranged in order to provide the connection with an upper half-width of a frame;
- a second portion (520), perpendicular to the first portion (510), arranged in the form of a passage with a U-shaped section in order to engage with a blade (17) fastened to the side of the frame.

7. Installation according to one of the preceding claims, **characterised in that** it comprises second corner connectors (700) comprising:
- a first portion (710) arranged in order to provide the connection with a lower half-width of a frame;
- a second portion (720), perpendicular to the first portion (710), arranged in the form of a passage with a U-shaped section, in order to engage with a blade (17) fastened to the side of the frame.

8. Installation as claimed in the preceding claim, **characterised in that** the first portion (710) of a second corner connector (700) is arranged in order to engage with a blade (19) of straight section fastened to the front surface of the frame.

9. Installation according to one of claims 7 or 8, **characterised in that** it comprises two lateral passages (300, 400) in order to provide the connection with the lateral portions of the solar panel frames, each passage (300, 400) being arranged in a U-shape on the one hand in order to provide a covering with the first and second corner connectors and on the other hand engage with a blade fastened to the side of the corresponding frame.

10. Installation according to one of the preceding claims, **characterised in that** it comprises a cover (800) associated to each solar panel frame comprising means of nesting (810) with the frame (15), said means of nesting comprising :
- a stop (811) with a length adapted to the width of the frame;
- a guide (812, 813) at each of the ends of the stops extending perpendicularly in relation to the stop;
- a clip (814) extending in the extension of the stop, over the length of the latter, in order to engage with a blade (16) fastened to the upper portion of the frame.

11. Installation as claimed in the preceding claim, **characterised in that** the cover (800) comprises a planar portion (815) comprising an edge (816) extending perpendicularly in relation to the planar portion (815) and according to the direction of the length of the cover (800), and having a predetermined height H in order to maintain in position roofing tiles directly adjoining the cover (800).

12. Installation according to one of the preceding claims and comprising:
- a first blade (16) fastened to the upper surface of the frame (15) in such a way that a clearance exists between this blade (16) and the solar panel;
- a second blade (19) fastened to the front surface of the frame in such a way that a clearance exists between this blade and the front surface of the frame.

13. Installation as claimed in the preceding claim, **characterised in that** the frame also comprises:
- a third blade (17) fastened to the left side of the frame in such a way that a clearance exists between this blade and the left side of the frame; and
- a fourth blade (18) fastened to the right side of the frame in such a way that a clearance exists between this blade and the right side of the frame.

14. Roof comprising an installation according to one of claims 12 or 13, **characterised in that** it comprises a plurality of tiles of the Grands Moules du Sud type of which the right end of the curved portion is thrust against the external portion of a fold (301) of the left lateral passage (300) of the installation.

15. Roof as claimed in the preceding claim, **characterised in that** it comprises a plurality of tiles of the Grands Moules du Sud type of which the left end of the curved portion engages with a fold (401) inside the right lateral passage (400) of the installation.

16. Roof according to one of claims 14 or 15, **characterised in that** it comprises a plurality of tiles, of the nesting tile type, arranged at the lower portion of said installations, each tile comprising at least one curved portion and one planar end portion in the upper extension of the curved portion, the end planar portion of a width between 100mm and 140mm being covered by the lower connection (200).
